# EUROPÄISCHE PATENTANMELDUNG

(11) **EP 2 055 512 A1**
(43) Veröffentlichungstag der Anmeldung: **06.05.2009**
(21) Anmeldenummer: 08105199.7
(22) Anmeldetag: 02.09.2008
(51) Int. Cl.: B60H 1/00, G01J 1/04

(54) **Optischer Sensor für ein Kraftfahrzeug**

(30) Priorität: 10.10.2007 DE 102007048612
(71) Anmelder: Robert Bosch GmbH, 70442 Stuttgart (DE)
(72) Erfinder: Pack, Andreas, 67500 Hagenau (FR)

(57) **Zusammenfassung**

Die Erfindung betrifft eine optische Einrichtung (1) für eine Bestimmung eines Eintrags von elektromagnetischer Strahlung (3) in ein Kraftfahrzeug, wobei
eine optische Linse (10) stirnseitig eine Einstrahlfläche (11) und eine wenigstens teilweise innerhalb der optischen Linse (10) angeordnete Abstrahlfläche (14, 15) aufweist, wobei
durch die Einstrahlfläche (11) elektromagnetische Strahlung (3) in die optische Linse (10) einstrahlbar und durch die Abstrahlfläche (14, 15) die elektromagnetische Strahlung (3) auf einen Detektor (30) richtbar ist.

## Beschreibung

Die Erfindung betrifft eine optische Einrichtung für eine Bestimmung eines Eintrags von elektromagnetischer Strahlung in ein Kraftfahrzeug. Ferner betrifft die Erfindung eine optische Sensoreinrichtung mit einer erfindungsgemäßen optischen Einrichtung und einem für elektromagnetische Strahlung empfindlichen Detektor.

Im Stand der Technik sind Sensoreinrichtungen, insbesondere für Kraftfahrzeuge, bekannt, welche Lichtstrahlung, wie Sonnenstrahlung oder künstliches Licht zu detektieren vermögen. Diese weisen einen Lichtleitkörper auf, durch welchen das Licht auf einen oder mehrere Detektoren gerichtet wird. Diese Sensoreinrichtungen dienen beispielsweise dazu, Beleuchtungseinrichtungen des Kraftfahrzeugs derart zu steuern, dass diese eingeschaltet werden, wenn das Fahrzeug in einen Tunnel einfährt oder eine Umgebungshelligkeit durch die einsetzende Dämmerung abnimmt, und entsprechend ausgeschaltet werden, wenn das Fahrzeug den Tunnel verlässt oder die Umgebungshelligkeit einen bestimmten Wert überschreitet.

Darüber hinaus sind Sensoreinrichtungen bekannt, welche eine Einfallsrichtung einer Lichteinstrahlung detektieren können, um neben den Beleuchtungseinrichtungen andere Einrichtungen des Kraftfahrzeugs, wie z. B. eine Klimaanlage zu steuern. Solche Sensoreinrichtungen weisen meist Sensorarrays oder Vier-Quadranten-Fotodioden auf.

Die DE 10 2004 055 060 A1 offenbart eine Sensoreinrichtung für eine Klimaanlage eines Kraftfahrzeugs. Die Sensoreinrichtung weist einen dreiteiligen Lichtleitkörper auf, der drei Empfänger umfasst, wobei ein jeder Empfänger Lichtstrahlung aus einer unterschiedlichen Richtung erfasst. Ein jeder Empfänger fokussiert das empfangene Licht auf ein als CCD-Element oder als Fotodiode ausgebildetes lichtempfindliches Element, das seinerseits ein Signal an eine Verarbeitungseinheit abgibt. Die Verarbeitungseinheit steuert anhand der drei Signale die Klimaanlage des Kraftfahrzeugs und optional auch die Scheibenwischer, falls die Sensoreinrichtung ein Bestandteil eines Regensensors ist.

Es ist auch möglich, Klimaanlagen und andere Einrichtungen des Kraftfahrzeugs unabhängig von einer Einstrahlrichtung von elektromagnetischer Strahlung auf bzw. in das Kraftfahrzeug zu betreiben. D. h., dass die entsprechende Sensoreinrichtung anhand der Menge der eingestrahlten elektromagnetischen Strahlung - anhand einer so genannten Solar-Load-Funktion, betrieben wird.

Linsen-Detektor-Systeme bzw. optische Sensoreinrichtungen für Klimaanlagen und andere Einrichtungen des Kraftfahrzeugs haben den Nachteil, dass elektromagnetische Strahlung, welche mit einem nur geringen Winkel einfällt, also so gut wie keinen senkrechten Anteil besitzt, nicht mit einer ausreichenden Effizienz erfasst werden kann. Dies beeinträchtigt einen Betrieb der Klimaanlage oder anderer Einrichtungen signifikant, vor allem, wenn die optische Sensoreinrichtung die betreffende Einrichtung des Kraftfahrzeugs nur anhand der eingefallenen Menge an elektronmagnetischer Strahlung steuert und einen Einfallswinkel der elektronmagnetischen Strahlung nicht berücksichtigt.

Darüber hinaus beeinträchtigen solche optischen Sensoreinrichtungen den Betrieb der Klimaanlage oder anderer Einrichtungen des Kraftfahrzeugs stark, falls die optische Sensoreinrichtung eine Einfallsrichtung der elektromagnetischen Strahlung mitberücksichtigt. Ein Beispiel hierfür ist eine seitlich bezüglich des Fahrzeugs tief stehende Sonne. Die elektromagnetische Strahlung der Sonne fällt mit einem nur geringen Winkel auf die optische Sensoreinrichtung ein, und wird nur mehr noch ungenügend detektiert, obwohl noch ein starker Einfall der elektromagnetischen Strahlung auf das Fahrzeug stattfindet und dieses aufheizt.

Es ist eine Aufgabe der Erfindung, eine verbesserte optische Einrichtung sowie eine verbesserte optische Sensoreinrichtung zum Erfassen einer elektromagnetischen Strahlung anzugeben, um ein Aggregat oder eine Einrichtung des Kraftfahrzeugs anhand der eingefallenen elektromagnetischen Strahlung zu steuern bzw. zu regeln.

Insbesondere soll dabei erfindungsgemäß eine optische Einrichtung bzw. eine optische Sensoreinrichtung zur Verfügung gestellt werden, die die elektromagnetische Strahlung über einen großen Einfallswinkelbereich erfassen kann, um anhand der eingestrahlten Menge an elektromagnetischer Strahlung das Aggregat bzw. die Einrichtung des Kraftfahrzeugs entsprechend steuern bzw. regeln zu können.

Darüber hinaus soll die erfindungsgemäße optische Einrichtung bzw. die erfindungsgemäße optische Sensoreinrichtung dazu geeignet sein, eine Einstrahlrichtung der elektromagnetischen Strahlung berücksichtigen zu können. D. h. es sollen diejenigen Bereiche feststellbar sein, in welchen mehr bzw. weniger an elektromagnetischer Strahlung auf das Kraftfahrzeug bzw. auf eine Scheibe, insbesondere eine Windschutzscheibe trifft, um insbesondere eine Klimaanlage des Kraftfahrzeugs entsprechend ansteuern zu können.

Die Aufgabe der Erfindung wird mittels einer optischen Einrichtung für eine Bestimmung eines Eintrags von elektromagnetischer Strahlung gemäß Anspruch 1 und mittels einer optischen Sensoreinrichtung gemäß Anspruch 10 gelöst.

In einer Ausführungsform der Erfindung ist die optische Einrichtung eine optische Linse mit einer Einstrahl- und einer Abstrahlfläche für elektromagnetische Strahlung. Erfindungsgemäß ist dabei die Abstrahlfläche wenigstens teilweise derart innerhalb einer äußeren Begrenzung der optischen Linse vorgesehen, dass durch die Abstrahlfläche elektromagnetische Strahlung auf einen Detektor lenkbar bzw. richtbar ist.

Hierbei soll unter einer äußeren Begrenzung der optischen Linse eine allgemeine Scheibe bzw. ein allgemeiner Stab verstanden werden. Insbesondere eignen sich hierfür gerade und schiefe allgemeine Zylinder, bei welchen eine Grund- und eine Deckfläche nicht unbedingt parallel angeordnet sein müssen. Als eine äußere Begrenzung für die optische Linse eignen sich Prismen und bevorzugt gerade Zylinder mit elliptischer oder kreisförmiger Grundfläche. Insbesondere bevorzugt ist ein gerader Kreiszylinder. Darüber hinaus ist es möglich, dass die Mantellinien eines Umfangs der Scheibe bzw. des Zylinders nicht alle parallel zueinander angeordnet sind. Hierbei ist insbesondere ein konusförmiger Aufbau der Scheibe bzw. des Zylinders denkbar.

In bevorzugten Ausführungsformen der Erfindung ist die Abstrahlfläche vollständig bzw. nahezu vollständig innerhalb der äußeren Begrenzung der optischen Linse, an der optischen Linse ausgebildet. Nahezu vollständig soll in diesem Fall bedeuten, dass die Abstrahlfläche in einen Bereich bzw. in einen Abschnitt der äußeren Begrenzung, bevorzugt tangential, übergehen kann. In anderen Ausführungsformen der Erfindung ist es möglich, dass ein Bereich oder Abschnitt der Abstrahlfläche einen Bereich oder Abschnitt der äußeren Begrenzung der optischen Linse bildet.

In Ausführungsformen der Erfindung ist die Abstrahlfläche wenigstens bereichs- bzw. abschnittsweise eine fokussierende Abstrahlfläche. Ferner kann die Abstrahlfläche bereichs- bzw. abschnittsweise eine plane Abstrahlfläche sein. Hierbei ist es bevorzugt, dass die plane Abstrahlfläche im Wesentlichen parallel zur bevorzugt ebenfalls ebenen Einstrahlfläche der optischen Linse angeordnet ist.

In Ausführungsformen der Erfindung ist die optische Linse wenigstens teilweise rotationssymmetrisch ausgebildet. Bevorzugt sind hierbei optische Linsen, die bezüglich einer optischen Achse rotationssymmetrisch ausgebildet sind. Insbesondere bevorzugt sind vollständig rotationssymmetrische optische Linsen.

Erfindungsgemäß kann ein Bereich oder ein Abschnitt eines Querschnitts der fokussierenden Abstrahlfläche beliebig gekrümmt sein, solange diese Krümmung die elektromagnetische Strahlung auf einen Detektor richtet. Hierbei hängt die Formgebung von einer Größe des Detektors ab. Bevorzugt ist eine Begrenzungslinie eines Bereichs oder eines Abschnitts des Querschnitts der fokussierenden Abstrahlfläche ein Abschnitt einer Parabellinie bzw. ein Abschnitt eines Ellipsen- oder Kreisbogens.

In bevorzugten Ausführungsformen der Erfindung ist die fokussierende Abstrahlfläche der optischen Linse ein vollständig oder teilweise umlaufender konvexer oder balliger Abschnitt. Hierbei ist der Bereich der Linse, welcher die Abstrahlfläche bildet, ein ellipsenring- oder kreisringförmiger Teil eines Torus, bevorzugt ein Viertel-Torus.

In bevorzugten Ausführungsformen der Erfindung besitzt die plane Abstrahlfläche eine Kreis- oder eine Ellipsenform. Hierbei schließt sich bei bevorzugten Ausführungsformen der Erfindung die fokussierende Abstrahlfläche direkt an die plane Abstrahlfläche an. Bevorzugt ist dabei, dass die plane Abstrahlfläche zentral bezüglich der fokussierenden Abstrahlfläche angeordnet ist.

So kann beispielsweise die gesamte Abstrahlfläche in ihren sämtlichen zueinander rotationssymmetrischen Querschnitten aus zwei Viertelkreisbögen und einer diese beiden verbindenden geraden Linie zusammengesetzt sein. Die beiden Viertelkreisbögen erstrecken sich dabei von der äußeren Begrenzung der optischen Linse in diese hinein und sind zentral innerhalb der optischen Linse durch die gerade Linie verbunden. Die gerade Linie wird in ihrer Mitte von der optischen Achse geschnitten. In einer Draufsicht (in Richtung der optischen Achse) auf die Abstrahlfläche ist dann die plane Abstrahlfläche ein Kreis und die, die plane Abstrahlfläche umgebende fokussierende Abstrahlfläche ein Kreisring, dessen Dicke einem Radius eines Viertelkreisbogens entspricht.

In bevorzugten Ausführungsformen der Erfindung weist die optische Linse einen Lichtleitabschnitt auf, der die elektromagnetische Strahlung zur Abstrahlfläche leitet. Hierbei weist der Lichtleitabschnitt dann stirnseitig die Einstrahlfläche auf.

Für Ausführungsformen der Erfindung, bei welcher eine Totalreflexion der einfallenden elektromagnetischen Strahlung an einer Außenseite des Lichtleitabschnitts oder der optischen Linse nicht hoch genug ist, kann eine Außenseite des Lichtleitabschnitts und/oder eine Außenseite der optischen Linse verspiegelt sein.

Bei der Anwendung der optischen Linse für eine optische Sensoreinrichtung eines Kraftfahrzeugs, wird die bevorzugt plane Einstrahlfläche der optischen Linse mittels eines optischen Koppelmediums, bevorzugt mittels eines Silikonkissens, an einer Scheibe des Kraftfahrzeugs, insbesondere einer Windschutzscheibe angeordnet.

Für das Befestigen der optischen Linse und mit ihr verbundener Vorrichtungen, wie z. B. dem Detektor der optischen Sensoreinrichtung, befindet sich die optische Linse sowie der Detektor in einem geeigneten Gehäuse, das dann an der Windschutzscheibe befestigbar ist.

Die erfindungsgemäße optische Linse kann sämtliche Bereiche von Einfallswinkeln auf die Windschutzscheibe oder die optische Linse selbst, gut erfassen. Darüber hinaus erlaubt eine detaillierte Ausgestaltung der Linsenoberfläche, insbesondere eine detaillierte Ausgestaltung der Abstrahlfläche der optischen Linse eine beliebige, winkelabhängige Gewichtung der einfallenden elektromagnetischen Strahlung.

Weitere Ausführungsformen der Erfindung ergeben sich aus den übrigen abhängigen Ansprüchen.

Die Erfindung wird im Folgenden anhand von Ausführungsbeispielen unter Bezugnahme auf die beigefügte Zeichnung näher erläutert. In der Zeichnung zeigen:
- Fig. 1: eine optische Einrichtung mit einer ersten allge- meinen Ausführungsform einer optischen Linse;
- Fig. 2: eine optische Einrichtung mit einer zweiten allge- meinen Ausführungsform der optischen Linse;
- Fig. 3: eine optische Einrichtung mit einer erfindungsgemä- ßen optischen Linse, die einen Lichtleitabschnitt aufweist; und die
- Fig. 4-7: optische Einrichtungen mit jeweils einer weiteren Ausführungsform der optischen Linse.

Die Erfindung wird im Folgenden anhand einer optischen Einrichtung für eine optische Sensoreinrichtung für die Steuerung einer Klimaanlage eines Kraftfahrzeugs näher beschrieben. Die optische Einrichtung bzw. die optische Sensoreinrichtung soll jedoch nicht auf eine solche Ausführungsform beschränkt sein, sondern kann z. B. auch für die Steuerung von LCD-Verdunkelungen für Fahrzeugscheiben, Lüftungen, Umluftklappen, -schalter, Spiegel, Heizeinrichtungen und andere Einrichtungen angewendet werden.

Ferner kann im Folgenden unter einer optischen Einrichtung eine optische Linse oder eine Scheibe mit der optischen Linse oder die Scheibe mit der optischen Linse und einem Gehäuse, in welchem darüber hinaus auch noch andere Komponenten untergebracht sein können, verstanden werden. Die erfindungsgemäße optische Sensoreinrichtung umfasst dann entsprechend die optische Einrichtung und einen Detektor. Darüber hinaus soll im Folgenden unter einer elektromagnetischen Strahlung Wärme bzw. Infrarotstrahlung sowie Licht, insbesondere sichtbares Licht, verstanden werden.

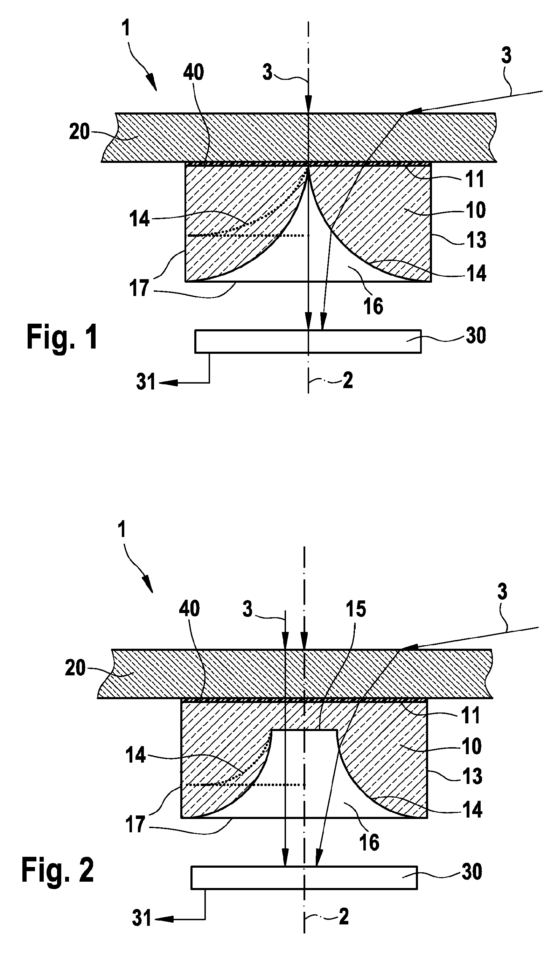

Fig. 1 zeigt eine erste allgemeine Ausführungsform einer optischen Einrichtung 1 mit einer optischen Linse 10, die an einer Scheibe 20, bevorzugt einer Windschutzscheibe 20 angeordnet ist. Hierbei ist zwischen der Scheibe 20 und der optischen Linse 10 bzw. einer Einstrahlfläche 11 der optischen Linse 10 ein optisches Koppelmedium 40, bevorzugt ein Silikonkissen vorgesehen, um eine von außerhalb der Scheibe 20 kommende elektromagnetische Strahlung 3 über die Scheibe 20 gut in die optische Linse 10 einkoppeln zu können.

Die optische Linse 10 hat in ihrer äußeren Begrenzung 17 die Form einer Scheibe bzw. eines Zylinders, dessen Durchmesser bevorzugt größer als dessen Höhe ist. Hierbei soll die äußere Begrenzung 17 eine Ausnehmung 16 nicht mit berücksichtigen. D. h. die äußere Begrenzung 17 der optischen Linse 10 betrifft einen Mantel sowie zwei Stirnseiten der optischen Linse 10, wobei die Stirnseiten bevorzugt ebene Stirnflächen sind (im Hinblick auf die äußere Begrenzung) und der diese verbindende Mantel mathematisch stetig oder auch teilweise mathematisch unstetig ausgebildet sein kann. Im letzteren Fall hat die optische Linse 10 beispielsweise die Form eines Prismas.

Die bevorzugt rotationssymmetrische, zylinderförmige optische Linse 10 weist an ihrer der Einstrahlfläche 11 gegenüberliegenden Seite eine Ausnehmung 16 auf, die die Abstrahlfläche 14, (15) der optischen Linse 10 definiert. Im in Fig. 1 dargestellten Ausführungsbeispiel besitzt die Ausnehmung 16 die Form eines Trichters und begrenzt einen konvexen, innerhalb der optischen Linse 10 vollständig umlaufenden Wulst, der als Viertel-Torus bezeichnet werden kann. Hierbei berührt sich eine innere Begrenzung dieses Viertel-Torus wenigstens in einem einzigen Punkt (Fig. 1), wobei es jedoch möglich ist, dass sich der Torusring noch weiter zusammenschnüren kann.

Darüber hinaus ist es möglich, eine Mantelfläche dieses Trichters nicht aus einem rotierenden Kreisbogen zusammenzusetzen, sondern aus einem rotierenden Ellipsenbogen oder einem rotierenden Parabelabschnitt, was mit den gepunkteten Linien in Fig. 1 verdeutlicht ist. Bevorzugt deckt dabei sowohl der Kreis- als auch der Ellipsenbogen bzw. der Parabelabschnitt einen 90°-Sektor ab.

Auf die Scheibe 20 auftreffende elektromagnetische Strahlung 3 wird, je nach Einstrahlungswinkel, zur optischen Achse 2 hin gebrochen, passiert die Scheibe 20 sowie das Silikonkissen 40 und tritt über die Einstrahlfläche 11 in die optische Linse 10 ein. Hierbei wird je nach Brechungsindex der Scheibe 20, des Silikonkissens 40 und der optischen Linse 10 die elektromagnetische Strahlung 3 mehr oder weniger stark zur optischen Achse 2 hin gebrochen.

Daraufhin passiert die elektromagnetische Strahlung 3 die Linse 10 und trifft auf die fokussierend ausgebildete Abstrahlfläche 14 der optischen Linse 10. Nach Passieren der Abstrahlfläche 14 wird die einfallende elektromagnetische Strahlung 3 auf den Detektor 30, z. B. ein CCD-Element oder eine Fotodiode, fokussiert bzw. gerichtet bzw. geleitet. Ein Ausgangssignal 31 des Detektors 30 wird einer Verarbeitungs-oder Steuereinrichtung (nicht dargestellt) zugeführt, die die Signale für die Klimaanlage oder die anderen Ein- und/oder Vorrichtungen entsprechend weiterverarbeitet.

Erfindungsgemäß ist es durch die optische Linse 10 möglich, nicht nur direkt einfallende elektromagnetische Strahlung 3, sondern auch stark seitlich bezüglich der Scheibe 20 einfallende elektromagnetische Strahlung 3 auf den Detektor 30 zu fokussieren. Erfindungsgemäß ist es möglich, nahezu alle denkbaren Winkel der einfallenden elektromagnetischen Strahlung mit ausreichender Effizienz zu erfassen. Hierdurch kann die elektromagnetische Strahlung 3 für jeden beliebigen Einfallswinkel mit einer hohen Ausbeute auf den Detektor 30, der daher klein ausgebildet sein kann, fokussiert werden.

Die folgenden Ausführungen beziehen sich nun auf andere Ausgestaltungen der optischen Linse 10, insbesondere im Bereich ihrer Abstrahlfläche 14, 15. Die zur Fig. 1 gemachten Äußerungen sollen daher ebenfalls die Fig. 2 bis 7 betreffen. Dies soll auch umgekehrt gelten. Es ist also möglich, die zu den Fig. 2 bis 7 gemachten Ausführungen, auf Ausführungsformen der Erfindung gemäß Fig. 1 zu übertragen, bzw. Merkmale der Ausführungsformen der Erfindung nach den Fig. 1 bis 7 untereinander entsprechend abzuwandeln.

Fig. 2 zeigt die optische Linse 10 mit einer zusammengesetzten Abstrahlfläche 14, 15. Hierbei ist die Abstrahlfläche 15 eine plane Abstrahlfläche 15, die bevorzugt zentral innerhalb der optischen Linse 10 vorgesehen ist. Mittels der planen Abstrahlfläche 15 ist es möglich, direkt einfallendes Licht direkt und geradlinig auf den Detektor 30 einfallen zu lassen. Im dargestellten Ausführungsbeispiel der Fig. 2 ist die plane Abstrahlfläche 15 kreisförmig.

An den Kreisring der Abstrahlfläche 15 schließt sich die rotationssymmetrische Abstrahlfläche 14 an, die wiederum von einem rotierenden Kreisbogen, bevorzugt einem rotierenden Vierteilkreisbogen besteht. Hierbei ist die gesamte Abstrahlfläche 14, 15 rotationssymmetrisch.

Durch die zusammengesetzte Abstrahlfläche 14, 15, die einen planen 15 und einen fokussierenden Bereich 14 bzw. Abschnitt 14 aufweist, wird ebenfalls wiederum eine trichterförmige Ausnehmung 16 innerhalb der optischen Linse 10 geschaffen, deren Grund innerhalb der optischen Achse 2 vorgesehen ist und kreisförmig ausgebildet ist. Bei solchen Ausführungsformen der Erfindung nach Fig. 2 ist es wiederum möglich, statt Kreisbögen, Ellipsenbögen oder Parabelabschnitte für das Erzeugen der Abstrahlfläche 14 zu verwenden, was wiederum mit den gepunkteten Linien verdeutlicht ist.

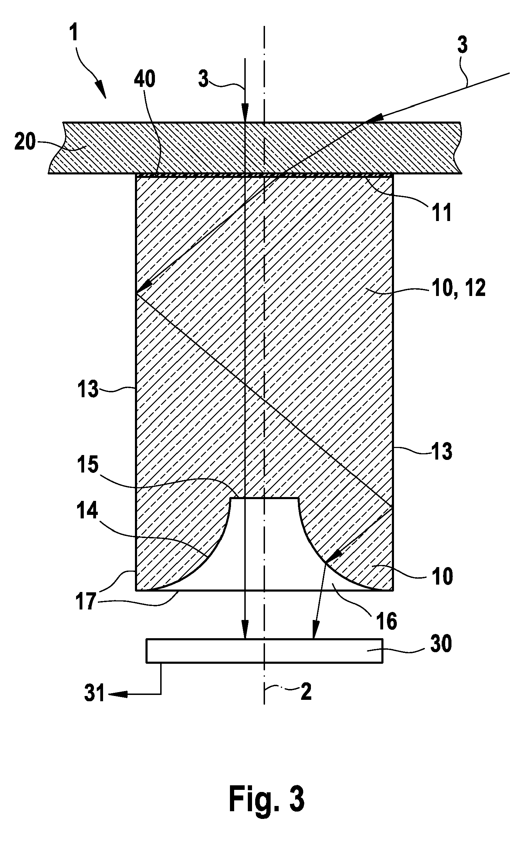

Fig. 3 zeigt nun eine Ausführungsform der erfindungsgemäßen optischen Linse 10 mit einem Lichtleitabschnitt 12, der die elektromagnetische Strahlung 3 in einen Bereich eines freien Endes der optischen Linse 10 transportiert, an/in welchem die Abstrahlfläche 14, 15 vorgesehen ist. Bei einer solchen Ausführungsform der optischen Linse 10 ist es möglich, die Abstrahlfläche 14, 15, wie zu den anderen Figuren beschrieben auszubilden.

Der Lichtleitabschnitt 12 der optischen Linse 20 transportiert schräg einfallende elektromagnetische Strahlung 3 innerhalb der optischen Linse 20 bevorzugt über eine Totalreflexion an einer Außenfläche 13 des Lichtleitabschnitts 12 in einen Bereich der Abstrahlfläche 14, 15. Ferner ist es bevorzugt, dass die elektromagnetische Strahlung 3 an der Außenseite 13 in einem Bereich der Abstrahlfläche 14, 15 der optischen Linse 10 ebenfalls über Totalreflexion reflektiert wird.

Sollte es aufgrund der Gegebenheiten nicht möglich sein, einen überwiegenden Teil der elektromagnetischen Strahlung 3 über eine Totalreflexion innerhalb der optischen Linse 10 an deren Außenfläche 13 zu reflektieren, so kann die Außenfläche 13 der optischen Linse 10 verspiegelt sein. Dies ist auch nur abschnitts- oder bereichsweise möglich. Insbesondere ist es bevorzugt, dass die elektromagnetische Strahlung 3 mit einem geringen Einfallswinkel bzgl. der Scheibe 20 bzw. mit einem großen Einfallswinkel bzgl. zum Lot (optische Achse 2) auf eine Scheibenoberfläche innerhalb der optischen Linse 10 über Totalreflexion reflektiert wird.

Der Lichtleitabschnitt 12 der optischen Linse 10 ist hauptsächlich dazu da, einen gegebenen Abstand zwischen der Scheibe 20 und dem Detektor 30 zu überbrücken.

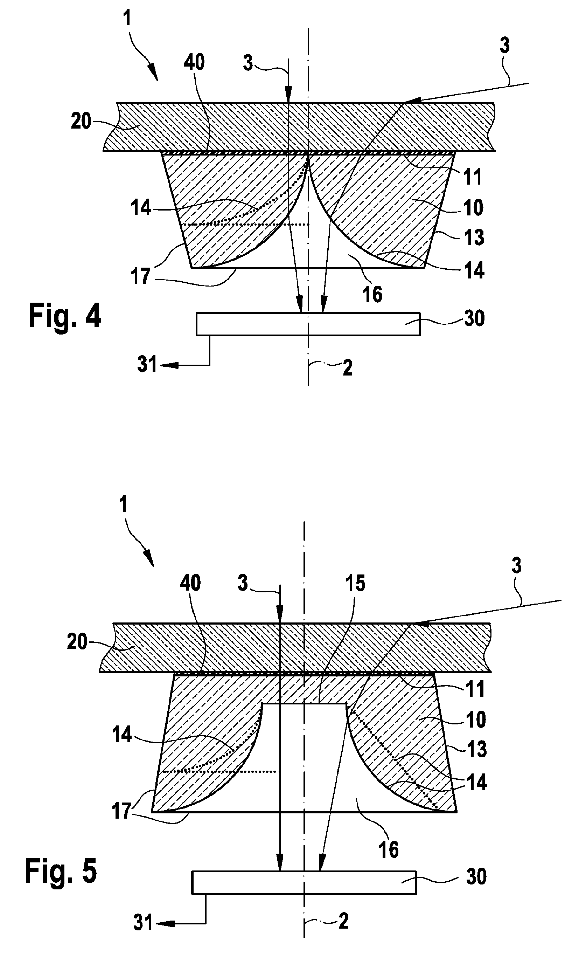

Die Fig. 4 und 5 zeigen nun Ausführungsformen der Erfindung, bei welcher die Mantellinien der optischen Linse 10 nicht alle parallel zueinander angeordnet sind. Dies verleiht der optischen Linse 10 ein kegelstumpf- oder konusförmiges Aussehen. Ein sich daran in anderen Ausführungsformen der Erfindung anschließender Lichtleitabschnitt 12 ist dabei wiederum bevorzugt als Zylinder ausgebildet.

Wie gestrichelt in den Fig. 4 und 5 dargestellt ist, ist wiederum eine ellipsen- oder parabelförmige Erzeugende für die Abstrahlfläche 14 anwendbar. Darüber hinaus ist es möglich - wie in Fig. 5 rechts innerhalb der optischen Linse 10 dargestellt - die Abstrahlfläche 14 durch eine gerade Linie zu erzeugen, was natürlich auch auf die anderen Ausführungsformen der Erfindung anwendbar ist. Durch eine gerade Erzeugende der Abstrahlfläche 14 erhält man eine kegelförmige (in Anwendung auf eine Ausführungsform der Erfindung gemäß Fig. 1) oder eine kegelstumpfförmige Abstrahlfläche 14.

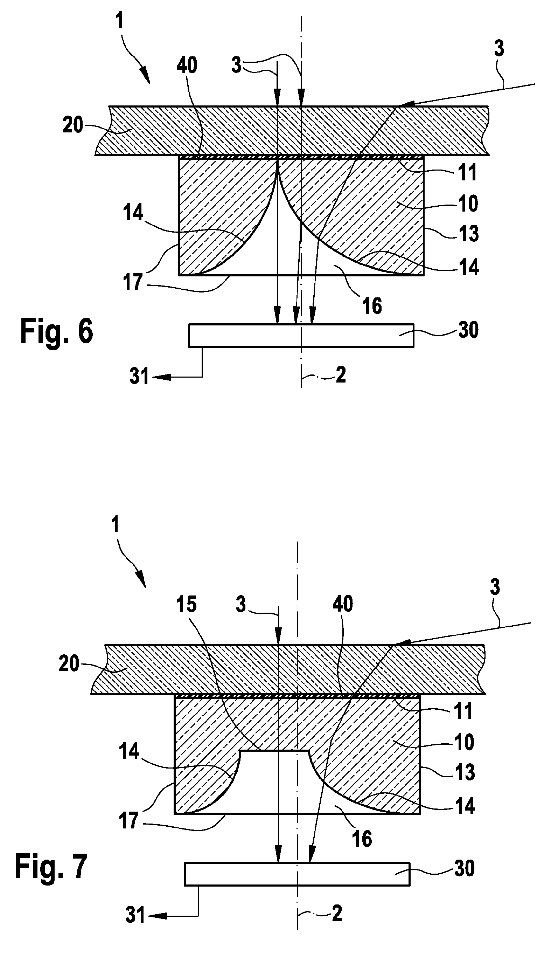

Die Fig. 6 und 7 zeigen nun Ausführungsformen der erfindungsgemäßen optischen Linse 10, deren Ausnehmung 16 nicht mehr oder nur noch teilweise rotationssymmetrisch ausgebildet ist. Bei einer teilweisen rotationssymmetrischen Ausbildung verändert die Erzeugende bei einer Rotation ihre Länge und/oder Form. Dies ist wiederum analog den Ausführungen zu Fig. 1 und 2 anwendbar.

Darüber hinaus ist es möglich, eine Grundfläche der optischen Linse 10 nicht oder nur teilrotationssymmetrisch auszubilden. Dies ist z. B. bei einer ellipsenförmigen Grundfläche der optischen Linse 10 der Fall.

Ferner ist es möglich, die Abstrahlfläche 14 und auch die Abstrahlfläche 15 als eine Freiformfläche auszubilden. Darüber hinaus ist es bevorzugt, als Erzeugende für die Abstrahlfläche 14 einen Abschnitt einer Parabel bzw. eine Parabellinie zu verwenden, was selbstverständlich auch auf rotationssymmetrische Abstrahlflächen 15 anwendbar ist (siehe oben).

Generell ist die Abstrahlfläche 14, 15 nicht divergierend auszulegen. Hierbei ist es bevorzugt, dass die Abstrahlfläche 15 fokussierend ist, wohingegen die Abstrahlfläche 14 bevorzugt weder eine fokussierende noch eine nicht fokussierende Wirkung, insbesondere für direkt einfallende elektromagnetische Strahlung 3, besitzen soll.

## Patentansprüche

1. Optische Einrichtung für eine Bestimmung eines Eintrags von elektromagnetischer Strahlung (3) in ein Kraftfahrzeug, wobei
eine optische Linse (10) stirnseitig eine Einstrahlfläche (11) und eine wenigstens teilweise innerhalb der optischen Linse (10) angeordnete Abstrahlfläche (14, 15) aufweist, wobei
durch die Einstrahlfläche (11) elektromagnetische Strahlung (3) in die optische Linse (10) einstrahlbar und durch die Abstrahlfläche (14, 15) die elektromagnetische Strahlung (3) auf einen Detektor (30) richtbar ist.

2. Optische Einrichtung gemäß Anspruch 1, wobei die Abstrahlfläche (14, 15) der optischen Linse (10) wenigstens bereichsweise eine fokussierende Abstrahlfläche (14) aufweist.

3. Optische Einrichtung gemäß Anspruch 1 oder 2, wobei die fokussierende Abstrahlfläche (14) der optischen Linse (10) ein wenigstens teilweise umlaufener, konvexer Abschnitt (14) der optischen Linse (10) ist.

4. Optische Einrichtung gemäß einem der Ansprüche 1 bis 3, wobei ein Bereich eines Querschnitts der fokussierenden Abstrahlfläche (14) der optischen Linse (10) eine Freiformfläche ist, oder die Form eines Parabel-, eines Ellpisen- oder eines Kreissegments bzw. -sektors besitzt.

5. Optische Einrichtung gemäß einem der Ansprüche 1 bis 6, wobei die Abstrahlfläche (14, 15) der optischen Linse (10) bereichsweise eine plane Abstrahlfläche (15) aufweist, und
die plane Abstrahlfläche (15) im Wesentlichen parallel zur Einstrahlfläche (11) der optischen Linse (10) angeordnet ist.

6. Optische Einrichtung gemäß einem der Ansprüche 1 bis 5, wobei die optische Linse (10) einen Lichtleitabschnitt (12) aufweist, der
die elektromagnetische Strahlung (3) über eine Reflexion an einer Außenseite (13) der optischen Linse (10) zur Abstrahlfläche (14, 15) leitet.

7. Optische Einrichtung gemäß einem der Ansprüche 1 bis 6, wobei die Außenseite (13) der optische Linse (10) verspiegelt ist.

8. Optische Einrichtung gemäß einem der Ansprüche 1 bis 7, wobei die optische Linse (10) bezüglich einer optischen Achse (3) der optischen Einrichtung (1) bzw. bezüglich einer optischen Achse (3) der optischen Linse (10) wenigstens teilweise rotationssymmetrisch ausgebildet ist.

9. Optische Einrichtung gemäß einem der Ansprüche 1 bis 8, wobei die Einstrahlfläche (11) der optischen Linse (10) im Wesentlichen plan ist, und
die optische Linse (10) mittels eines optischen Koppelmediums (40), bevorzugt mittels eines Silikonkissens (40), mit ihrer Einstrahlfläche (11) an einer Scheibe (2), insbesondere einer Windschutzscheibe (2), des Kraftfahrzeugs befestigbar ist.

10. Optische Sensoreinrichtung mit einem für elektromagnetische Strahlung (3) empfindlichen Detektor (30) und einer optischen Einrichtung (1) nach einem der Ansprüche 1 bis 9, wobei
mittels einer inneren Abstrahlfläche (14, 15) der optischen Einrichtung (1) elektromagnetische Strahlung (3) auf den Detektor (30) richtbar ist.
